# EUROPEAN PATENT APPLICATION

(11) **EP 2 184 696 A1**
(43) Date of publication of application: **12.05.2010**
(21) Application number: 08168109.0
(22) Date of filing: 31.10.2008
(51) Int. Cl.: G06F 21/00

(54) **Method and module for protecting a password authorizing a user access to a computer application**

(71) Applicant: Kretov, Kirill, 1290 Versoix (CH)
(72) Inventor: Kretov, Kirill, 1290 Versoix (CH)
(74) Representative: Leman Consulting S.A.

(57) **Abstract**

Method for protecting a password used for accessing a computer application (APP); said password formed by a sequence of alphanumeric characters and symbols is entered by means of keys of a keyboard (KB), each key being associated with a key code and a state parameter defining the key as pressed or released, the method is **characterized in that** it comprises the steps of:
- typing with the keyboard a string of alphanumeric characters and symbols and storing in a memory associated with the keyboard (KB) each key code and state parameter to form a first sequence (SEQ1),
- selecting, according to predetermined criteria, either at least one key code or at least one key code together with a state parameter of the stored key codes and state parameters of the first sequence (SEQ1),
- submitting the selected key codes and state parameters in a second sequence (SEQ2) of key codes and state parameters to the computer application (APP), said second sequence (SEQ2) forming the password authorizing access to the computer application (APP).

A further object of the invention consists of a password protection module connected between a computer keyboard and an application module controlled by said computer, said module being able to carry out the steps of above described method.

## Description

### Field of the invention

The present invention relates to a method and a module for protecting a password authorizing a user access to a computer application by preventing capture of the password without the knowledge of the user.

### Technical background

Whenever a password is chosen by a user for accessing a local or a remote computer application, a sequence of alphanumeric characters and symbols is entered by means of a keyboard into an appropriate window or command line of an application user interface. Passwords that are easy to remember having a short length, for example 6 characters or less, can be quickly found by brute force attack and thus they are not recommended for login. There is no suitable opportunity for non skilled users, besides having a list of complex characters sequences difficult to memorize, to keep passwords in a secure location or to protect them in an efficient way against theft.

Furthermore passwords can be captured by a special program called key logger installed by malicious third parties into the computer along with spywares like Trojan horses during connection to Internet for example.

Various sophisticated solutions have been applied as countermeasures to password capture attempts, such as cited below:

Document US7206938 describing a method wherein a first step consists of defining at least one statistical relevance criterion that will qualify certain keystrokes in a group of keystrokes typed by the user as what will be described as a "mini-rhythm." The statistical relevance criteria can be chosen from a number of criteria, including mean, standard deviation, qualified margin, number of fits, etc. The next step in the method consists of requiring the user to enter an enrollment phase. During this phase, the user enters at a keyboard sample text that the user normally enters over a certain period of time. The period of time and the amount of text in this situation would be governed by how soon mini-rhythms were detected and qualified using the selected statistical relevance criteria. The keystroke characteristics that are sensed in the system include the key up and key down signal, the dwell time, and flight time. The end of entering the phrase of text is typically ended when the subject presses an enter key. If the subject enters a delete key, backspace key, or other "error" key indicating that corrections are desired, the entire sample is typically discarded. The sample text could include alphanumeric characters, as well as non-alphanumeric keyboard actions, such as the control key, the right and left shift keys, the spacebar, the alt key, and combinations of these keys.

Document US6895514, describing a method and an apparatus for enhancing the security of systems needing an input of a password. The authorization decision related to passwords is based not only on entry of the correct characters in the correct character sequence, but also on the keystroke sequence timing associated with the typing habits of an authorized user. The keystroke sequence timing provides an additional security measure to each password similar to signature or fingerprint systems. Te correct character sequence associated with each password is predetermined and prerecorded in an adaptive system to be used as a reference with which to compare entered passwords. The keystroke sequence timing associated with the typing habit of the authorized user is also recorded in this adaptive system and used as a reference to be compared to the keystroke sequence timing when one enters a password. Keystroke sequence timing is determined by starting a timer when the user presses the first key corresponding to the first character of the password. The timer measures the time lapse between each consecutive key stroke following the first key stroke.

Document US6715086 describing a method, system, and program product capable of receiving a first input-event signal followed by a second input-event signal. In response to the second input-event signal, a character code and an associated time-span code are generated. The time-span code reflects the amount of time that separated the first input-event signal from the second. In an illustrative embodiment, the first and second input-event signals may comprise a key-down signal from a particular key on a keyboard and a key-up signal from that key respectively, in which case the generated character code would-correspond to that key. Alternatively, the first input-event signal may comprise a key-up signal or a start signal from a program, and the second input-event signal may comprise a key-down signal or an entry-complete signal, in which case the generated character code would comprise a pause character code, provided sufficient time separated the first input-event signal from the second.

Document US2006136737, wherein the user keying password is a sequence of characters including at least one character from a first set of characters and at least one character from a second set of characters. The first set of characters is text characters allowed for defining a user password. The second set of characters is keying characters not allowed for defining a user password. It is determined whether the received user keying password matches a keying password reference. The keying password reference is based on a password definition rule. For a keyboard, examples of a "text character" includes: "a", "Z", "9", "%", etc. A "keying character" is a non text character and denotes a state of a user-controlled element of an input device. For a keyboard, examples of keying characters include the Caps Lock key, the Control (Ctrl) key, the Shift key, etc.

Document US7362244 describing a user programmable input apparatus with a keyboard comprises several keys on the keyboard for input operations, a microprocessor to receive inputs from the keys, a nonvolatile memory programmable by operating the keys, and a transmission arrangement connected to the microprocessor to output data to outside of the input apparatus. A method to operate the input apparatus comprises detecting the trigger signal of the keyboard, on which a special key is provided, storing certain data to the nonvolatile memory when the trigger signal is a programming signal, transmitting normal data corresponding to the key signal to outside of the input apparatus by the transmission arrangement when the trigger signal is a normal keying signal, and reading certain data corresponding to a programmed keying signal from the nonvolatile and/or executing the operation corresponding to the certain data when the trigger signal is matched to a programmed keying signal.

### Summary of the invention

The aim of the present invention is to enforce the strength of the password protection in a simple and efficient way by changing the process of the password input so that the most commonly used key loggers are mistaken i.e. the recorded characters sequence does not correspond to the sequence typed by the user on the keyboard.

This aim is achieved by a method for protecting a password used for accessing a computer application; said password formed by a sequence of alphanumeric characters and symbols is entered by means of keys of a keyboard, each key being associated with a key code and a state parameter defining the key as pressed or released, the method is **characterized in that** it comprises the steps of:
- typing with the keyboard a string of alphanumeric characters and symbols and storing in a memory associated with the keyboard each key code and state parameter to form a first sequence,
- selecting according to predetermined criteria either at least one key code or at least one key code together with a state parameter of the stored key codes and state parameters of the first sequence,
- submitting the selected key codes and state parameters in a second sequence of key codes and state parameters to the computer application, said second sequence forming the password authorizing access to the computer application.

The method of the invention consists of filtering the typed sequence of alphanumeric characters and symbols converted into key codes and state parameters to obtain a new sequence which is the password accepted by the application. In these circumstances, a key logger records the first sequence typed by the user but not the second sequence which is not recorded at the same level as the key logger.

Moreover, the accepted password cannot be captured by an observer seeing and trying to memorize the typed keys because the visible part of the password corresponds to the first sequence which is not filtered. A brute force attack will thus take a much longer time than for a conventional password to find the correct sequence due to the filter and therefore increased number of possible combinations of key codes and state parameters.

The alphanumeric characters and symbols are defined as corresponding to any key of a keyboard or to a combination of keys, i.e. the complete set of alphabetic characters, numbers, signs, punctuations and all function keys like F1 to F12, arrows, insert, home, Page up and down, delete, end etc. Each key of the keyboard has a corresponding key code converted into a special character or symbol according to the standardized ASCII or EBCDIC table.

The selection criteria or the filter may consist of a list of key codes and state parameters to be eliminated from the first sequence to obtain the second sequence. Such a list, called black list, is stored in a non volatile memory associated with the keyboard. In an embodiment the list may contain the key codes and state parameters authorized to form the second sequence, such a list is then called white list. Other criteria can be applied for filtering the first sequence such as for example allowing or eliminating only the upper or lower case characters, only the numbers, only the keys from a particular area of the keyboard, etc.

In order to improve security, the second sequence may be either encrypted by a secret key or hashed with a unidirectional collision free function such as MD5 for example before presenting to the computer application. This encryption step allows increasing the processing time in case of a brute force attack against the entered password and therefore reinforces its protection.

A further object of the invention is a password protection module connected between a computer keyboard and an application module controlled by said computer, said password being formed by a sequence of alphanumeric characters and symbols typed by means of a plurality of keyboard keys, each key being associated with a key code and a state parameter defining the key as pressed or released, the module is **characterized in that** it comprises:
- a memory associated to the keyboard for storing typed alphanumeric characters and symbols in the form of a first sequence of key codes and state parameters,
- a filter module configured for selecting according to predetermined criteria either at least one key code or one key code together with a state parameter of the first sequence
- means for transmitting and submitting the selected key codes and state parameters in a second sequence of key codes and state parameters to the computer application, said second sequence forming a password authorizing access to the computer application.

The password protection module may comprise additional modules configured either for encrypting the second sequence with a secret key, or applying a hash function on the whole sequence or on segments previously cut from the sequence and subsequently arranged to form the password.

The method and the module of the invention are not only applicable to standard personal computers keyboards having 105 keys in US layout for MS Windows but also to any kind of computer keyboard, such as extended keyboards with 24 F function keys and other keys, laptop keyboards with additional functions or shortcut keys, non-Latin alphabet character keyboards, etc. A password or a first sequence can thus be specific to a type of keyboard and therefore impossible to compose on some other type of keyboard not generating the appropriate key codes.

### Brief description of the figures

The invention will be better understood thanks to the following detailed description referring to the enclosed figure given as non-limit example.

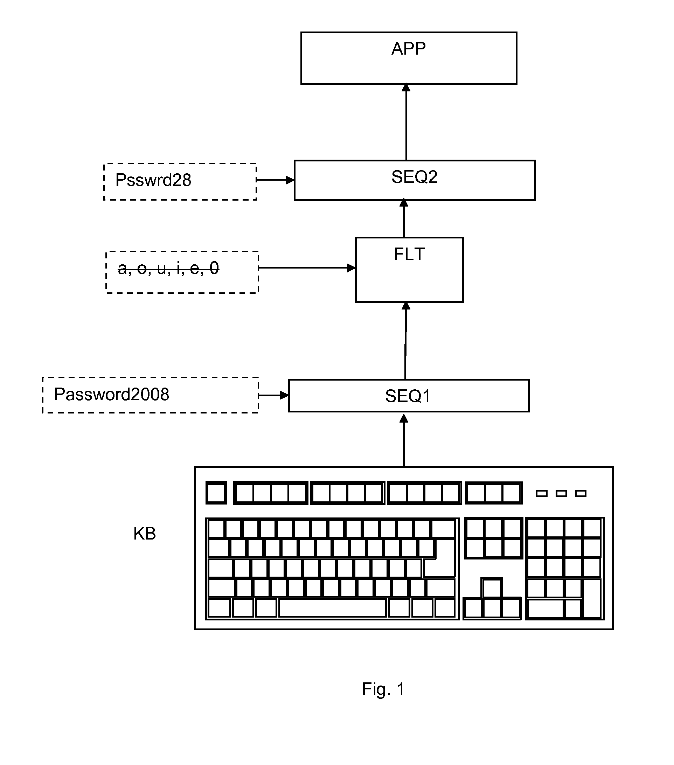

Figure 1 represents a block diagram of an example of filtering a first password sequence to obtain a second sequence presented to a computer application.

### Detailed description of the invention

The example of figure 1 shows the mechanism of changing the password entered by a keyboard into a new password which is effectively presented and recognized as being valid by the computer application. In order to simplify the drawing, only the typed characters are represented instead of the corresponding key codes and state parameters whereon the filtering is made.

In figure 1 the first sequence "Password2008" is stored as its corresponding key code defined by a standard ASCII table and its state parameter d and u (down and up).

"Password2008" is then converted into a first sequence (SEQ1) i.e. [16d 80d 80u 16u 65d 65u 83d 83u 83d 83u 87d 87u 79d 79u 82d 82u 68d 68u 50d 50u 48d 48u 48d 48u 56d 56u], where 16d represents the key code 16 for the "Shift" key pressed down for typing a "P" in upper case, 80d represents the key code of "p" character pressed down and 80u the same character "p" released or up, 16u is for releasing the "Shift" key, 65d 65u is for pressing and releasing "a" character and so on for the other characters of the sequence. Each character of this example is stored by its corresponding key code defined by a standard ASCII table and its state parameter d and u (down and up).

The filter (FLT) module contains a black list whose function is to eliminate all vowels and zeroes (a, o, u, i, e, 0), or [65, 79, 85, 73, 69, 48] in the first sequence (SEQ1) to give a second sequence (SEQ2) "Psswrd28" i.e. [16d 80d 80u 16u 83d 83u 83d 83u 87d 87u 82d 82u 68d 68u 50d 50u 56d 56u] In this case the filter (FLT) deletes both states d and u of each listed character. This second sequence (SEQ2) is submitted to the application (APP) which recognizes it as the effective password.

When the state parameter is taken into account, several passwords may be composed by a sequence of two characters typed with only two keys "A" and "B" for example. A sequence made by pressing "A" key and releasing "A" key and pressing "B" key and releasing "B" key will be different from a sequence made by pressing "A" key and holding it, then pressing "B", key and releasing "B" key and finally releasing "A" key. There is also a possibility to press "A" key, hold it, and then press "B" key, release the "A" key and release "B" key. In other words there are 8 combinations for two buttons A and B namely: AdBdAuBu, AdBdBuAu, AdAuBdBu, BdAdBuAu, BdAdAuBu, BdBuAdAu, AdAuAdAu, and BdBuBdBu where d means down or key pressed and u means up or key released. The filter (FLT) module can also be configured to eliminate or accept only state parameters of certain keys in order to differentiate the one or the other combination of two or more keys including d and u state parameters.

It has to be noted that a same key can't be pressed twice without being released in between. Considering the above example, combinations like AdAdAuAu and BdBdBuBu are simply impossible. However most computer systems will return multiple key down states for a key being held during a certain time period, such duplicates are eliminated. Therefore, before filtering, the first sequence (SEQ1) is prepared so that combinations like AdAdAdAdAdBdBdBdBdAuBdBu are converted into AdBdAuBu.

An advantage of the invention is thus the possibility to use short passwords by pressing only three or four keys which are able to generate an increased number of possible submitted sequences thanks to the state parameters and to the various possibilities of filter configurations.

Finally after filtering the first sequence (SEQ1), the resulting second sequence (SEQ2) may be transformed by an additional module including any mathemical function or preferably by a hash function such as MD5. If the length of the sequence becomes important, it can be divided into a plurality of segments and the function will be applied on each segment separately. The transformed segments are then arranged in a new sequence which is submitted to the application as a secure password. The second sequence (SEQ2) can also be encrypted with a key stored in a read only memory using a symmetric or an asymmetric algorithm. In case one of these options are applied, the password initially typed is provided with a double protection consisting on one hand of filtering key codes and state parameters and on the other hand of transforming or encrypting by a function or respectively an algorithm.

The example of figure 1 can be summarized as follow:
1) Keys pressed: "Shift" p, a, s, s, w, o, r, d, 2, 0, 0, 8
2) First sequence (SEQ1): [16d 80d 80u 16u 65d 65u 83d 83u 83d 83u 87d 87u 79d 79u 82d 82u 68d 68u 50d 50u 48d 48u 48d 48u 56d 56u]
3) Filter with blacklisted key codes: [65d, 65u, 79d 79u, 85d, 85u, 73d, 73u, 69d, 69u, 48d, 48u]
4) Second sequence (SEQ2): [16d 80d 80u 16u 83d 83u 83d 83u 87d 87u 82d 82u 68d 68u 50d 50u 56d 56u]
5) Password submitted to the application: "Psswrd28".
6) Optional MD5 hash function on the second sequence will give a hexadecimal string such as: (d51bb96216f82502814210fd3b1a06ed) which is submitted to the application instead of "Psswrd28".

Since each key of the keyboard may be used for typing a password, functions like pressing "enter" key for terminating the password input and pressing "delete" key or the "backspace" key for correcting a wrong typed character may be performed with an input device distinct from the keyboard such as a mouse, a touchpad, a trackball, a joystick, a tablet etc. Therefore "enter", "delete" or "backspace" keys do not need to be included in the blacklist of the filter.

For example p, a, s, s, s "backspace", 8,"left arrow", 0, "right arrow", "enter" will not give "pass08" as expected by an observer trying to capture the typed password or by a key logger program.

In fact first sequence (SEQ1) will be [80d, 80u, 65d, 65u, 83d, 83u, 83d, 83u, 83d, 83u, 8d, 8u, 56d, 56u, 37d, 37u, 48d, 48u, 39d, 39u, 13d, 13u] instead of [48d, 48u, 80d, 80u, 65d, 65u, 83d, 83u, 83d, 83u, 48d, 48u, 56d, 56u] corresponding to the typed characters "pass08".

Assuming that the filter is the same as in the first example, the blacklisted key codes are: [65d, 65u, 79d 79u, 85d, 85u, 73d, 73u, 69d, 69u, 48d, 48u]

The second sequence (SEQ2) will be: [80d, 80u, 83d, 83u, 83d, 83u, 83d, 83u, 8d, 8u, 56d, 56u, 37d, 37u, 39d, 39u, 13d, 13u] which is different from "pss8" i.e. [80d, 80u, 83d, 83u, 83d, 83u, 56d, 56u] obtained after filtering the first sequence without taking account the key codes of the typed special keys "backspace", "left arrow", "right arrow", and "enter".

A filter may be relatively complex by the fact it is not only configured for removing vowels or other specific characters but also removing some key codes only with state parameters "down" or key codes only with state parameter "up". For example, a filter removes all key codes of typed numeric characters with a state parameter "down", alphabetic characters key codes with state parameters "up", control keys like "enter", "backspace", "escape", etc. are preserved each with their "up" and "down" state parameters and F1 to F5 function key are entirely removed while F6 to F10 keys are preserved only with the "up" state parameter. Such a filter will render the password brute force attack very fastidious and time consuming, which is the aim of the present invention.

It has to be noted that in the method of the present invention, the password does not depend on time parameters or rhythm in which the characters or symbols are typed as in the documents US7206938, US6895514 and US6715086.

Furthermore in document US2006136737 a password is defined with two parameters: a "password keying" and a character sequence. A password keying or PK represents a way or a rule defining how a password is specified by a user to the input device (keyboard, mouse or other pointing device). The PK is defined by a set of characters which are not allowed for defining the password and the password is made up of a string of alpha numeric characters according to a preferred embodiment. In an example PK is defined as: "type the two first characters of the password, then the Alt key and the remaining characters of the password". If the user gives the correct characters sequence of the password in one word without taking account of the PK, the password will not be accepted. In other word such a password has a value (characters sequence) and typing conditions or rule defined by special characters not included in the sequence of the password. Therefore, the value of the password can be considered as remaining constant since the user typed characters are the same as those accepted by the application.

As the PK is a supplementary parameter attached to the value of the password, the notion of filter module provided with a black or a white list cannot be considered as disclosed in US2006136737 document. Such a filter modifies the value of the password, i.e. the user typed password is different from the password effectively accepted by the application. In US2006136737, the typed alphanumeric characters do not pass through a filter which decides to accept or reject a character belonging to the first set qualified as allowed for defining a password.

In the present invention, all characters can then be considered as allowed for typing, but the filter rejects some typed characters before submitting the password to the application. The key logger records all typed characters but the application will recognize only the ones which are not blacklisted. The value of the password typed by the user is thus modified by the filter before submission to the application. A correct character sequence will thus be always accepted since there is no typing condition to satisfy like the PK as described in document US2006136737.

## Claims

1. Method for protecting a password used for accessing a computer application (APP); said password formed by a sequence of alphanumeric characters and symbols is entered by means of keys of a keyboard (KB), each key being associated with a key code and a state parameter defining the key as pressed or released, the method is **characterized in that** it comprises the steps of:
- typing with the keyboard a string of alphanumeric characters and symbols and storing in a memory associated with the keyboard (KB) each key code and state parameter to form a first sequence (SEQ1),
- selecting, according to predetermined criteria, either at least one key code or at least one key code together with a state parameter of the stored key codes and state parameters of the first sequence (SEQ1),
- submitting the selected key codes and state parameters in a second sequence (SEQ2) of key codes and state parameters to the computer application (APP), said second sequence (SEQ2) forming the password authorizing access to the computer application (APP).

2. Method according to claim 1, **characterized in that** the selection of the key codes or key codes with state parameters in the first sequence (SEQ1) is performed by a filter (FLT) module storing a list of key codes or of key codes with state parameters of alphanumeric characters or symbols intended to be deleted from the first sequence (SEQ1) to obtain the second sequence (SEQ2).

3. Method according to claim 1, **characterized in that** the selection of the key codes or key codes with state parameters in the first sequence (SEQ1) is performed by a filter (FLT) module storing a list of key codes or of key codes with state parameters of alphanumeric characters or symbols intended to be preserved in the first sequence (SEQ1) to obtain the second sequence (SEQ2), the remaining key codes and/or states parameters of alphanumeric characters or symbols being deleted.

4. Method according to claims 1 to 3, **characterized in that** it comprises steps of encrypting the second sequence (SEQ2) with a secret key, forming an encrypted password and submitting the new password to the computer application (APP).

5. Method according to claims 1 to 3, **characterized in that** it comprises steps of applying a hash function on the second sequence (SEQ2), forming a new sequence and submitting said new sequence as password to the application (APP).

6. Method according to claims 1 to 3, **characterized in that** it comprises steps of dividing the second sequence (SEQ2) in a plurality of segments, applying a hash function on each segment separately, arranging the obtained segments to form a new sequence and submitting said new sequence as password to the application (APP).

7. Password protection module connected between a computer keyboard and an application module controlled by said computer, said password being formed by a sequence of alphanumeric characters and symbols typed by means of a plurality of keyboard keys, each key being associated with a key code and a state parameter defining the key as pressed or released, the module is **characterized in that** it comprises:
- a memory associated to the keyboard for storing typed alphanumeric characters and symbols in the form of a first sequence (SEQ1) of key codes and state parameters,
- a filter module configured to select according to predetermined criteria either at least one key code or one key code together with a state parameter of the first sequence (SEQ1),
- means for transmitting and submitting the selected key codes and state parameters in a second sequence (SEQ2) of key codes and state parameters to the computer application (APP), said second sequence (SEQ2) forming a password authorizing access to the computer application (APP).

8. Module according to claim 7, **characterized in that** the filter (FLT) module stores a list of key codes or of key codes with state parameters of alphanumeric characters or symbols intended to be deleted from the first sequence (SEQ1) for obtaining the second sequence (SEQ2).

9. Module according to claim 7, **characterized in that** the filter (FLT) module stores a list of key codes or of key codes with state parameters of alphanumeric characters or symbols intended to be preserved in the first sequence (SEQ1) to obtain the second sequence (SEQ2), the remaining key codes and/or state parameters of alphanumeric characters or symbols being deleted.

10. Module according to claim 7 to 9, **characterized in that** it comprises an additional module having means to encrypt the second sequence (SEQ2) with a secret key, forming an encrypted password and submitting the new password to the computer application (APP).

11. Module according to claim 7 to 9, **characterized in that** it comprises an additional module having means to apply a hash function on the second sequence (SEQ2), forming a new sequence and submitting said new sequence as password to the application (APP).

12. Module according to claim 7 to 9, **characterized in that** it comprises an additional module having means to divide the second sequence (SEQ2) into a plurality of segments, applying a hash function on each segment separately, arranging the obtained segments to form a new sequence and submitting said new sequence as password to the application (APP).
